# EUROPEAN PATENT APPLICATION

(11) **EP 4 846 853 A1**
(43) Date of publication of application: **02.12.2026**
(21) Application number: 25745197.1
(22) Date of filing: 23.01.2025
(51) Int. Cl.: A23D 9/00, A23G 1/36

(54) **OIL AND FAT COMPOSITION**

(30) Priority: 24.01.2024 JP 2024008383
(71) Applicant: Fuji Oil Company, Limited, Izumisano-shi Osaka 598-8540 (JP)
(72) Inventor: WATANABE, Shimpei, Tsukubamirai-shi, Ibaraki 300-2436 (JP); ICHIMURA, Haruka, Tsukubamirai-shi, Ibaraki 300-2436 (JP)
(74) Representative: Boult Wade Tennant LLP
(86) International application number: PCT/JP2025/002046
(87) International publication number: WO 2025/159154

(57) **Abstract**

An object of the present invention is to provide a new oil and/or fat composition which is suitable for use in a chocolate product and does not substantially contain lauric acid. Disclosed is an oil and/or fat composition satisfying (a) and (b) described below: (a) a weight ratio of a content of a triglyceride having two palmitic acids (P) and one palmitoleic acid (Po) bonded thereto (P2Po) to a content of a triglyceride having two palmitic acids (P) and one monounsaturated fatty acid having from 16 to 24 carbon atoms (M) bonded thereto (P2M) (P2Po/P2M), is 0.04 or more; and (b) a content of a triglyceride having three saturated fatty acids each having from 16 to 24 carbon atoms (S) bonded thereto (S3), is from 1.5 to 13 wt.%.

## Description

### Technical Field

### Related Application

This application claims the benefit of priority from Japanese Patent Application No. 2024-008383 filed on January 24, 2024. The priority application is incorporated herein by reference in its entirety.

The present invention relates to an oil and/or fat composition and a chocolate product containing the oil and/or fat composition.

### Background Art

A cocoa butter alternative (cocoa butter alternative (CBA)) to be blended in a chocolate product is roughly classified into those for tempering type chocolate in which tempering is performed during production and those for non-tempering type chocolate in which tempering is not performed. CBS (cocoa butter substitute) classified as those for a non-tempering type chocolate is obtained by fractionating vegetable oils and/or fats containing lauric acid, such as palm kernel oil and coconut oil, and hydrogenation as necessary. CBS has melting characteristics similar to that of cocoa butter, and not only has preferable eating characteristics such as high snap properties at the time of eating, but also has preferable production characteristics of solidifying very quickly at the time of molding chocolate or at the time of producing complex confectionery in which chocolate is coated on confectionery or the like, and CBS can be obtained at a lower cost than cocoa butter, and thus is widely used as oil and/or fat for chocolate in the world. However, due to a large difference between a triglyceride structure of CBS mainly composed of lauric acid and a triglyceride structure included in cocoa butter, compatibility with cocoa butter is remarkably poor. As a result, in chocolate using CBS, when cocoa butter is blended at a concentration exceeding the limit concentration, fat bloom may occur on a surface of the chocolate, or a chocolate structure may become coarse (graining) due to the occurrence of bloom, and there is a problem that the product value is impaired.

In molded chocolate and chocolate complex confectionery produced using CBS, oil and/or fat is hydrolyzed due to inappropriate production conditions or storage conditions, or moisture transfer from the combined confectionery and bread, and an odor (soapy odor) caused by lauric acid may be developed and the product value may be significantly reduced.

Therefore, an oil and/or fat for chocolate product which suppresses the occurrence of the fat bloom of the chocolate product and does not substantially contain lauric acid has been desired.

### Citation List

### Patent Documents

Patent Document 1: JP S60-8397 A
Patent Document 2: JP H07-155106 A

### Summary of Invention

### Technical Problem

An object of the present invention is to find a new oil and/or fat composition which is suitable for use in a chocolate product and does not substantially contain lauric acid.

### Solution to Problem

As a method for solving such a problem, in the prior art, oil and/or fat which does not contain lauric acid and has sharp melting characteristics is disclosed in the prior art.

Patent Document 1 discloses that palm medium-melting point oil and/or fat from which a triglyceride rapidly crystallized, such as high-melting point oil and/or fat, is removed has physical properties similar to those of CBS, and similarly, Patent Document 2 discloses that chocolate using hard butter having a symmetrical triglyceride content of 70% or more and an asymmetrical triglyceride content of 4% or less has high snap properties and good meltability in the mouth.

However, Patent Documents 1 and 2 do not disclose an oil and/or fat composition containing a triglyceride containing palmitoleic acid (Po) as an essential component.

From various studies, the present inventors have found that although chocolate using an oil and/or fat composition containing, as a main component, 1, 3-dipalmitoyl-2-oleoyl glyceride (hereinafter, sometimes referred to as POP) which is a symmetrical triglyceride has high snap properties and good meltability in the mouth, the chocolate has problems that a solidification speed is slow and that fat bloom is likely to occur.

Thus, as a result of further intensive studies, the present inventors have found that the above problems can be solved by adding, to a POP-based oil and/or fat composition, a specific amount of a triglyceride having two palmitic acids (P) and one palmitoleic acid (Po) bonded thereto (hereinafter, sometimes referred to as P2Po) and a trisaturated glyceride (hereinafter, sometimes referred to as S3), and have completed the present invention.

That is, the present invention includes contents described below.
(1) An oil and/or fat composition satisfying (a) and (b) described below.
   (a) A weight ratio of a content of a triglyceride having two palmitic acids (P) and one palmitoleic acid (Po) bonded thereto (P2Po) to a content of a triglyceride having two palmitic acids (P) and one monounsaturated fatty acid having from 16 to 24 carbon atoms (M) bonded thereto (P2M) (P2Po/P2M), is 0.04 or more; and
   (b) A content of a triglyceride having three saturated fatty acids each having from 16 to 24 carbon atoms (S) bonded thereto (S3), is from 1.5 to 13 wt.%.
(2) The oil and/or fat composition according to (1), wherein the P2Po content in the oil and/or fat composition is 3.0 wt.% or more.
(3) The oil and/or fat composition according to (1) or (2), wherein the oil and/or fat composition is for a chocolate product.
(4) The oil and/or fat composition according to (3), wherein the oil and/or fat composition is for a non-tempering type chocolate product.
(5) A chocolate product containing: an oil and/or fat content of from 20.0 to 50.0 wt.% in the chocolate product; and the oil and/or fat composition described in (1) or (2) of 30.0 wt.% or more in the oil and/or fat content.
(6) The chocolate product according to (5), wherein the chocolate product is of a non-tempering type.
(7) A method for producing the chocolate product described in (5), the method for producing the chocolate product, including cooling and solidifying the melted chocolate product at a temperature of 10°C or higher.

### Advantageous Effects of Invention

According to the present invention, it is possible to provide an oil and/or fat composition which is suitable for use in a chocolate product and does not substantially contain lauric acid.

As a preferred aspect, when the oil and/or fat composition of the present invention, which is an oil and/or fat composition for a non-tempering type chocolate product, is used for a chocolate product and the like, the oil and/or fat composition is greatly advantageous as compared with known oil and/or fat compositions in that sharp melting characteristics and high snap properties can be imparted, sufficient solidification characteristics can be imparted in terms of production, a bloom does not occur, and prevention of a chocolate structure from becoming coarse (graining) due to the occurrence of blooms.

Although it is a presumption, it is speculated that P2Po, particularly PPoP, as an active ingredient, suppresses polymorphic transition of POP crystals, and contributes to improvement of solidification speed and suppression of fat bloom in the chocolate product.

In the present description, the phrase "not substantially contain lauric acid" means that lauric-based oil and/or fat such as coconut oil and palm kernel oil is not substantially used as raw materials.

### Description of Embodiments

The present invention will be described in detail below.

In the present description, "from (a number) to (a number)", which indicates a numerical range, includes the number after "from" as the lower limit of the numerical range and the number after "to" as the upper limit of the numerical range.

An arbitrary combination can be adopted as the upper limit and the lower limit in the numerical range.

The term "chocolate product" as used herein is not limited to "pure chocolate", "chocolate", "quasi-chocolate", and "chocolate-using foods" as defined by the Japan National Chocolate Industry Fair Trade Council, and refers to food products, including also oil and/or fat processed foods, that contain an oil and/or fat as an essential component and use cocoa mass, cocoa, whole milk powder, dried fruit juice powder, dried vegetable powder, plant milk powder, cocoa butter, cocoa butter alternatives, hard butter and the like. Accordingly, the term may also generally refer to foods in which edible substances are dispersed in an oil and/or fat-based matrix, including, for example, matcha-flavored foods and strawberry-flavored foods obtained by mixing powders derived from vegetables or fruits.

In the present description, stearic acid may be denoted as St, palmitic acid may be denoted as P, oleic acid may be denoted as O, and palmitoleic acid may be denoted as Po. A saturated fatty acid having from 16 to 24 carbon atoms and including St and P may be denoted as S. A monounsaturated fatty acid having from 16 to 24 carbon atoms and including O and Po may be denoted as M.

When the triglyceride is represented, for example, P2M means a triglyceride having two palmitic acids (P) and one monounsaturated fatty acid having from 16 to 24 carbon atoms (M) bonded thereto, P2Po means a triglyceride having two palmitic acids (P) and one palmitoleic acid (Po) bonded thereto, and S3 means a triglyceride having three saturated fatty acids each having from 16 to 24 carbon atoms (S) bonded thereto. Similarly, S2M means a triglyceride having two S and one M bonded thereto, and SSM means a triglyceride having S and M are bonded thereto at the 1, 3-positions and S bonded thereto at the 2-position.

In an aspect, the present invention provides an oil and/or fat composition. The oil and/or fat composition of the present aspect includes an oil and/or fat itself unless otherwise specified. Furthermore, in an aspect, the oil and/or fat composition of the present aspect is not an oil and/or fat itself, but contains other raw materials.

The oil and/or fat composition of the present aspect does not substantially contain lauric acid. Specifically, the lauric acid content in the constituent fatty acid is preferably less than 5 wt.%, more preferably less than 3 wt.%, still more preferably less than 2 wt.%, and most preferably less than 1 wt.%.

A weight ratio of a P2Po content to a P2M content (P2Po/P2M) in the oil and/or fat composition of the present invention is 0.04 or more, preferably from 0.05 to 0.50, more preferably from 0.05 to 0.35, and as another preferred example, from 0.05 to 0.25 or from 0.10 to 0.25.

The S3 in the oil and/or fat composition of the present invention is from 1.5 to 13 wt.%, preferably from 2 to 9 wt.%, from 2 to 7 wt.%, and more preferably from 2 to 5 wt.%.

A weight ratio of an SSM content to an S2M content (SSM/S2M) in the oil and/or fat composition of the present invention is preferably 0.05 or less, more preferably 0.04 or less, and still more preferably 0.03 or less.

A weight ratio of the P2M content to the S2M content (P2M/S2M) in the oil and/or fat composition of the present invention is preferably 0.8 or more, more preferably from 0.8 to 0.99, and still more preferably from 0.85 to 0.99.

The S2M content in the oil and/or fat composition of the present invention is preferably 70 wt.% or more, more preferably from 75 to 95 wt.%, still more preferably from 80 to 95 wt.%, and most preferably from 80 to 90 wt.%.

The P2Po content in the oil and/or fat composition of the present invention is preferably 3.0 wt.% or more, more preferably 6.0 wt.% or more, and as another preferred example, 8.0 wt.% or more and 10.0 wt.% or more. The P2Po content is preferably 80.0 wt.% or less, and more preferably 60.0 wt.% or less.

The Po content in the constituent fatty acid of the oil and/or fat composition of the present invention is preferably from 2 to 15 wt.%, more preferably from 2 to 9 wt.%, still more preferably from 2 to 8 wt.%, and most preferably from 2 to 6 wt.%.

A weight ratio of the Po content to an M content (Po/M) in the constituent fatty acid of the oil and/or fat composition of the present invention is preferably from 0.05 to 0.45, more preferably from 0.05 to 0.28, and still more preferably from 0.05 to 0.23.

The S content in the constituent fatty acid of the oil and/or fat composition of the present invention is preferably 50 wt.% or more, more preferably from 50 to 80 wt.%, still more preferably from 50 to 75 wt.%, and most preferably from 50 to 70 wt.%, for example from 61 to 67 wt.%.

A weight ratio of a content of the saturated fatty acid having 20 carbon atoms or more to the S content (saturated fatty acid having 20 carbon atoms or more/S) in the constituent fatty acid of the oil and/or fat composition of the present invention is preferably 0.01 or more, more preferably 0.02 or more, still more preferably 0.03 or more, and most preferably 0.04 or more. Use of the oil and/or fat composition in which the ratio is high is preferable because the chocolate product is excellent in bloom resistance.

An SFC (solid fat content) of the oil and/or fat composition of the present invention at 10°C is preferably 85% or more, and more preferably from 86 to 94%, for example from 90 to 93%.

The SFC of the oil and/or fat composition of the present invention at 15°C is preferably 80% or more, and more preferably from 83 to 90%.

The SFC of the oil and/or fat composition of the present invention at 20°C is preferably 66% or more, more preferably from 66 to 85%, for example from 73 to 85%.

The SFC of the oil and/or fat composition of the present invention at 30°C is preferably 15% or less, and more preferably 10% or less, and from 2.5 to 8%, for example from 0 to 7%.

Contents of DHA and EPA in the constituent fatty acid of the oil and/or fat composition of the present invention are preferably small. More specifically, a total content of DHA and EPA in the constituent fatty acid of the oil and/or fat composition is preferably less than 2%, for example, from 0 to 1.5%, or from 0.5 to 1.0%.

The raw material of the oil and/or fat composition of the present invention is not particularly limited as long as it is an edible oil and/or fat containing Po, and examples thereof include marine oils, various natural animal and plant oils such as plant oils and/or fats, and oils and/or fats obtained from microorganisms and algae.

In addition, oils and/or fats obtained from plants, microorganisms, and algae whose fatty acid composition has been modified to contain Po by using known breeding techniques using natural mutants and artificial mutants, or new breeding techniques represented by gene recombination techniques and genome editing techniques can also be used.

From the viewpoint of purity and cost, the raw material of the oil and/or fat composition of the present invention is preferably sea-buckthorn oil (sea-berry fruit oil), Bacuri fat, macadamia nut oil, hazelnut oil, seal oil, or the like, and among these, sea-buckthorn oil (sea-berry fruit oil) and Bacuri fat originally contain P2Po, and are particularly preferable because the oil and/or fat composition of the present invention can be obtained as it is or as a P2Po concentrated fraction by fractionation of the oil and/or fat.

Further, the oil and/or fat containing P2Po can be obtained by an interesterification reaction of an oil and/or fat rich in Po with a raw material containing P, and the oil and/or fat composition of the present invention can be obtained as this oil and/or fat as it is or as a concentrated fraction by fractionation of the oil and/or fat.

Examples of the raw material containing P include oils and/or fats, fatty acids, and lower alcohol esters thereof.

The interesterification reaction may be a method using a chemical catalyst or a method by an enzyme catalyst. As the chemical catalyst, for example, an alkali metal catalyst such as sodium methylate can be used. As the enzyme catalyst, lipase can be used, and among them, a 1, 3-position-specific lipase is preferably used. These lipases may be used after being immobilized on an ion-exchange resin, diatomaceous earth, or the like by a known method, or may be used in the form of a powder.

The oils and/or fats that can be used in the oil and/or fat composition of the present invention are not limited as long as the above configuration is satisfied, and examples thereof include vegetable oils and/or fats, such as soybean oil, high-erucic rapeseed oil, rapeseed oil, corn oil, cottonseed oil, peanut oil, sunflower oil, high-oleic sunflower oil, rice oil, safflower oil, high-oleic safflower oil, olive oil, sesame oil, palm oil, coconut oil, palm kernel oil, shea butter, sal fat, and cocoa fat; animal oils and/or fats, such as milk fat, beef tallow, and lard; a medium-chain triglyceride (MCT), and their hydrogenated oils, fractionated oils, hydrogenated fractionated oils, fractionated hydrogenated oils, and processed oils and/or fats produced subjected to interesterification; as well as mixed oils of these.

In the case of using high-erucic rapeseed oil, the content of erucic acid contained in the high-erucic rapeseed oil is preferably 30 wt.% or more in the constituent fatty acid composition.

In an aspect, the present invention provides a chocolate product containing the oil and/or fat composition of the above aspect. The chocolate product of the present aspect is preferably a non-tempering type chocolate product.

Although a blending amount of the oil and/or fat composition of the present invention in the chocolate product is not particularly limited, as a preferred aspect, when the oil and/or fat content in the chocolate product is from 20.0 to 50.0 wt.%, the oil and/or fat composition of the present invention is preferably contained in an amount of 30.0 wt.% or more in the oil and/or fat content. The lower limit is preferably 40.0 wt.%, 50.0 wt.%, 60.0 wt.%, 70.0 wt.%, or 80.0 wt.%. The oil and/or fat composition can be used until the upper limit reaches 100 wt.%, and can be used by being mixed with the oil and/or fat content such as cocoa butter as necessary. The oil and/or fat content in the chocolate product is preferably from 25.0 to 45.0 wt.% and from 30.0 to 40.0 wt.%. In such an aspect, a good solidification speed can be obtained, and even when the amount is less than 30 wt.%, occurrence of fat bloom can be delayed or suppressed.

In the chocolate product of the present invention, the S2M content in the oil and/or fat content of the chocolate product is preferably from 60 to 95 wt.%, more preferably from 65 to 90 wt.%, and still more preferably from 70 to 90 wt.%, for example, from 75 to 87 wt.%. The weight ratio of the SSM content to the S2M content (SSM/S2M) is preferably 0.2 or less, more preferably 0.15 or less, and still more preferably 0.1 or less.

In the chocolate product of the present invention, the P2Po content in the oil and/or fat content of the chocolate product is preferably 3 wt.% or more, more preferably from 3 to 42 wt.%, and as another preferred example, from 3 to 25 wt.%, from 3 to 21 wt.%, or from 3 to 17 wt.%.

In the chocolate product of the present invention, a cacao solid content such as cocoa mass and cocoa powder is blended for the purpose of making flavor and fragrance preferable, and a proportion of cocoa butter contained as a result is preferably from 0.1 to 30 wt.%, more preferably from 0.1 to 20 wt.%, and still more preferably from 0.1 to 15 wt.% with respect to the oil and/or fat content of the chocolate product.

In the chocolate product of the present invention, the oil and/or fat composition of the present invention containing P2Po is used by being melted together with other oil and/or fat raw materials during producing the chocolate product, but may be used as it is or after being mixed with other oils and/or fats, for example, cocoa butter or hard butter.

The method for producing the chocolate product using the oil and/or fat composition of the present invention can be carried out in the same manner as in producing a common chocolate product. Specifically, the chocolate product can be obtained by appropriately selecting and mixing, with the oil and/or fat containing the oil and/or fat composition of the present invention as an essential component, (a part of) cocoa mass, various powdered foods such as cocoa, saccharides, and powdered milk, and raw materials such as an emulsifier, an aroma agent, and a coloring agent; subjecting the mixture to roll refining as a refining step; adding the remaining raw materials as appropriate; and then performing conching or mixing treatment as a mixing step. Alternatively, for example, a production method in which a mixing step and a refining step are performed simultaneously using a ball mill, a bead mill, or the like can also be used.

In an aspect, the chocolate product obtained in a molten state is preferably cooled and solidified at a temperature of 10°C or higher. The temperature is more preferably 13°C or higher, and still more preferably 15°C or higher. The temperature is preferably 30°C or lower, more preferably 25°C or lower, and still more preferably 20°C or lower. By cooling and solidifying at a temperature of 10°C or higher, the chocolate product more excellent in initial chew, meltability in the mouth, and bloom resistance can be obtained.

### Examples

Examples will be described below, but the technical idea of the present invention is not limited to these examples. Note that in the examples, values in "part" or "%" are all expressed by weight.

### Analysis method

### [Method for analyzing fatty acid composition]

Fatty acid methyl ester was prepared in accordance with The Standard Methods for the Analysis of Fats, Oils and Related Materials (compiled by Japan Oil Chemists' Society) 2.4.1.2 Methyl Esterification Method (Boron Trifluoride/Methanol Method), and analyzed in accordance with The Standard Methods for the Analysis of Fats, Oils and Related Materials (compiled by Japan Oil Chemists' Society) 2.4.2.3 Fatty Acid Composition (Capillary Gas Chromatograph Method).

### [Method for analyzing triglyceride composition (high-performance liquid chromatography analysis)]

The content of triglyceride in the oil and/or fat can be determined as a total amount without distinguishing positional isomers having different binding sites to a glycerin skeleton, such as symmetrical or asymmetrical triglycerides, by high-performance liquid chromatography analysis (1) described below.

In addition, in a triglyceride having the same constituent fatty acid, a position isomer ratio of a symmetrical or asymmetrical triglyceride or the like (SSM (asymmetrical triglyceride having S bonded thereto at the 2-position and S and M bonded thereto at the 1, 3-positions)/S2M) can be measured and determined by high-performance liquid chromatography analysis (2). In any high-performance liquid chromatography analysis, qualitative analysis of each triglyceride to be measured was performed using a commercially available reagent. A triglyceride composition is shown as a proportion of each triglyceride in the total triglyceride.

The measurement by high-performance liquid chromatography analysis (1) was conducted under the conditions of column: ODS, eluent: acetone/acetonitrile = 80/20, liquid volume: 0.9 mL/min, column temperature: 25°C, and detector: differential refractometer.

The high-performance liquid chromatography analysis (2) was carried out according to the method described in J. High Resol. Chromatogr., 18, 105-107 (1995), ADLOF R.O., "Analysis of Triacylglycerol Positional Isomers by Silver Ion High Performance Liquid Chromatography".

The oil and/or fat N and Comparative Example 4 containing the oil and/or fat N are not described because a large amount of lauric acid is contained in the constituent fatty acid, resulting in inaccurate triglyceride composition data.

In the description of the analysis results, S represents a saturated fatty acid having 16 or more carbon atoms, M represents a monounsaturated fatty acid having 16 or more carbon atoms, and Po represents palmitoleic acid, S2M represents a triglyceride having two molecules of S and one molecule of M bonded thereto, P2M represents a triglyceride having two molecules of P and one molecule of M bonded thereto, P2Po represents a triglyceride having two molecules of P and one molecule of Po bonded thereto, S3 represents a triglyceride having three molecules of S bonded thereto, and SSM represents an asymmetrical triglyceride having S bonded thereto at the 2-position and S and M bonded thereto at the 1, 3-positions.

### [SFC Parallel measurements at each temperature]

The SFC was analyzed in accordance with IUPAC 2.150 SOLID CONTENT DETERMINATION IN FATS BY NMR. The analyzer used was "minispec mq20" available from Bruker Corporation.

The oil and/or fat is held at 80°C for 30 minutes, then held at 60°C for 30 minutes to completely melt the oil and/or fat, and held at 0°C for 1 hour to solidify the oil and/or fat. In addition, the SFC (solid fat content) was analyzed after being held at a predetermined temperature for 30 minutes.

### Method for producing oil and/or fat

High oleic sunflower oil or macadamia nut oil was used as a raw material oil and/or fat, and subjected to 1, 3-position enzyme interesterification with ethyl palmitate, and a fatty acid ethyl ester fraction was distilled off by distillation. The obtained oil and/or fat fraction was subjected to multistage fractionation as a raw material using a solvent to obtain an oil and/or fat rich in P2O and an oil and/or fat rich in P2Po. The obtained oils and/or fats were mixed to obtain oils and/or fats A to I having various P2Po contents. The palm mid fraction (iodine value: 35, P2O content: 63%, available from Fuji Oil Co., Ltd.) was defined as oil and/or fat J. In addition, the 1, 3-position enzyme interesterification was performed with ethyl stearate using high oleic sunflower oil as a raw material oil and/or fat, and the fatty acid ethyl ester fraction was distilled off by distillation. The obtained oil and/or fat fraction was subjected to multistage fractionation as a raw material using a solvent to obtain an oil and/or fat K rich in St2O. Fully hydrogenated palm oil and fully hydrogenated high erucic acid rapeseed oil (both available from Fuji Oil Co., Ltd.) were defined as an oil and/or fat L and an oil and/or fat M, respectively. Table 1 (unit: wt.%) shows the results of analysis according to [Method for analyzing triglyceride composition (HPLC)] described above, and Table 2 (unit: wt.%) shows the results of analysis according to [Method for analyzing fatty acid composition] described above.

**[Table 1]**

| | Oil and/or fat A | Oil and/or fat B | Oil and/or fat C | Oil and/or fat D | Oil and/or fat E | Oil and/or fat F | Oil and/or fat G | Oil and/or fat H | Oil and/or fat I | Oil and/or fat J | Oil and/or fat K | Oil and/or fat L | Oil and/or fat M |
|---|---|---|---|---|---|---|---|---|---|---|---|---|---|
| S2M | 89.1 | 88.6 | 88.0 | 87.6 | 87.7 | 87.8 | 87.9 | 87.3 | 87.0 | 82.6 | 93.5 | 0.0 | 0.0 |
| P2M | 83.4 | 82.2 | 80.7 | 79.3 | 80.2 | 81.1 | 82.0 | 82.4 | 85.9 | 65.5 | 0.3 | 0.0 | 0.0 |
| P2Po | 0.0 | 2.0 | 4.2 | 8.1 | 12.1 | 16.4 | 20.4 | 25.3 | 41.6 | 0.0 | 0.0 | 0.0 | 0.0 |
| S3 | 1.00 | 1.10 | 1.20 | 1.30 | 1.10 | 0.90 | 0.70 | 1.40 | 0.80 | 1.10 | 0.00 | 100.0 | 100.0 |
| P2M/ S2M | 0.9 | 0.9 | 0.9 | 0.9 | 0.9 | 0.9 | 0.9 | 0.9 | 1.0 | 0.8 | 0.0 | 0.0 | 0.0 |
| P2Po/ P2M | 0.00 | 0.02 | 0.05 | 0.10 | 0.15 | 0.20 | 0.25 | 0.31 | 0.48 | 0.00 | 0.00 | 0.00 | 0.00 |
| SSM/ S2M | 0.0 | 0.0 | 0.0 | 0.0 | 0.0 | 0.0 | 0.0 | 0.0 | 0.0 | 0.1 | 0.0 | 0.0 | 0.0 |

**[Table 2]**

| | Oil and/or fat A | Oil and/or fat B | Oil and/or fat C | Oil and/or fat D | Oil and/or fat E | Oil and/or fat F | Oil and/or fat G | Oil and/or fat H | Oil and/or fat I | Oil and/or fat J | Oil and/or fat K | Oil and/or fat L | Oil and/or fat M |
|---|---|---|---|---|---|---|---|---|---|---|---|---|---|
| Lauric acid | 0.0 | 0.0 | 0.0 | 0.0 | 0.0 | 0.0 | 0.0 | 0.0 | 0.0 | 0.1 | 0.0 | 0.0 | 0.0 |
| Myristic acid | 0.2 | 0.3 | 0.3 | 0.4 | 0.4 | 0.4 | 0.4 | 0.3 | 0.2 | 0.8 | 0.0 | 1.1 | 0.2 |
| Palmitic acid (P) | 58.7 | 58.0 | 58.8 | 59.6 | 60.5 | 61.3 | 60.9 | 62.2 | 64.2 | 56.9 | 2.4 | 44.2 | 3.9 |
| Palmitoleic acid (Po) | 0.0 | 1.3 | 1.9 | 3.9 | 5.2 | 6.5 | 8.1 | 9.2 | 14.5 | 0.0 | 0.0 | 0.0 | 0.0 |
| Stearic acid (St) | 1.8 | 1.8 | 1.7 | 1.6 | 1.4 | 1.2 | 1.2 | 1.0 | 0.4 | 6.3 | 62.6 | 54.0 | 39.8 |
| Oleic acid (O) | 37.7 | 36.3 | 34.9 | 31.2 | 29.2 | 27.3 | 25.9 | 23.7 | 16.9 | 31.7 | 33.3 | 0.0 | 0.0 |
| Cis-vaccenic acid | 0.1 | 0.3 | 0.4 | 0.5 | 0.6 | 0.7 | 0.8 | 0.8 | 1.1 | 0.3 | 0.1 | 0.0 | 0.0 |
| Linoleic acid | 0.5 | 0.5 | 0.5 | 0.5 | 0.7 | 0.9 | 1.1 | 1.3 | 2.1 | 3.0 | 0.4 | 0.0 | 0.0 |
| Arachidic acid | 0.1 | 0.6 | 0.6 | 1.3 | 1.1 | 1.0 | 0.9 | 0.7 | 0.2 | 0.5 | 0.4 | 0.3 | 8.5 |
| Behenic acid | 0.0 | 0.0 | 0.0 | 0.0 | 0.0 | 0.0 | 0.0 | 0.0 | 0.0 | 0.0 | 0.0 | 0.4 | 46.7 |
| Lignoceric acid | 0.0 | 0.0 | 0.0 | 0.0 | 0.0 | 0.0 | 0.0 | 0.0 | 0.0 | 0.0 | 0.0 | 0.0 | 0.9 |
| S content | 60.8 | 60.7 | 61.4 | 62.9 | 63.5 | 63.9 | 63.3 | 64.2 | 64.9 | 64.6 | 65.4 | 100 | 100 |
| Po/M | 0.00 | 0.03 | 0.05 | 0.11 | 0.15 | 0.19 | 0.23 | 0.27 | 0.45 | 0.00 | 0.00 | 0.00 | 0.00 |
| P/S | 0.97 | 0.96 | 0.96 | 0.95 | 0.95 | 0.96 | 0.96 | 0.97 | 0.99 | 0.88 | 0.04 | 0.44 | 0.04 |

### [Study 1] Effect of P2Po content in non-tempering type chocolate product

### Mixing of oil and/or fat composition

The oils and/or fats A to L were mixed in the contents listed in Table 3 (unit: wt.%) to obtain oil and/or fat compositions of Examples/Comparative Examples. The triglyceride compositions of these oil and/or fat compositions are listed in Table 4. The results of analyzing these oil and/or fat compositions according to [SFC Parallel measurements at each temperature] described above are listed in Table 5.

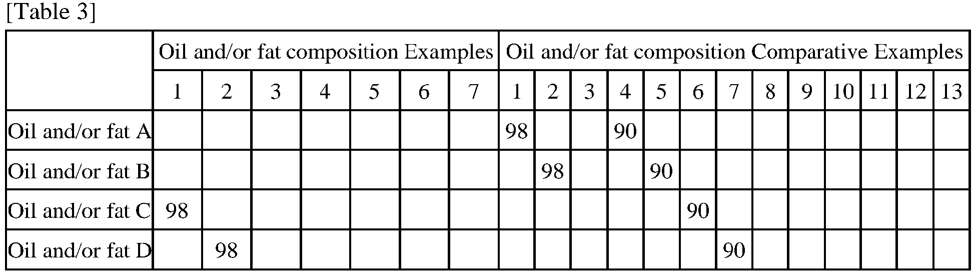

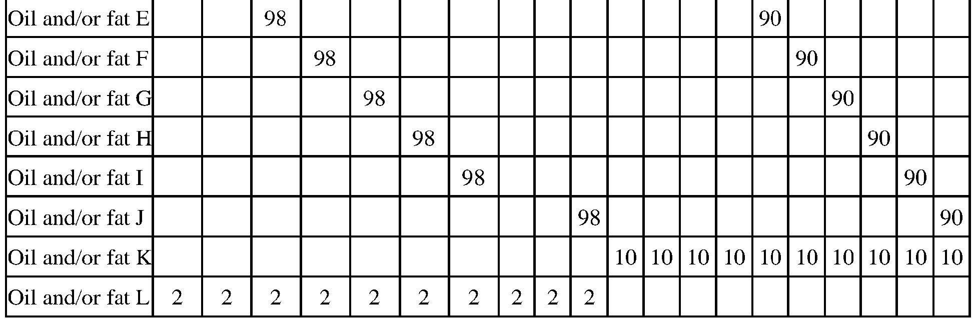

**[Table 4]**

| | Oil and/or fat composition Examples | | | | | | | Cocoa butter | | | | | |
|---|---|---|---|---|---|---|---|---|---|---|---|---|---|
| | 1 | 2 | 3 | 4 | 5 | 6 | 7 | | | | | | |
| S2M | 86.2 | 85.8 | 85.9 | 86.0 | 86.1 | 85.6 | 85.3 | 77.9 | | | | | |
| P2M | 79.1 | 77.7 | 78.6 | 79.5 | 80.4 | 80.8 | 84.2 | 14.8 | | | | | |
| P2Po | 4.1 | 7.9 | 11.9 | 16.1 | 20.0 | 24.8 | 40.8 | 0.0 | | | | | |
| S3 | 3.2 | 3.3 | 3.1 | 2.9 | 2.7 | 3.4 | 2.8 | 1.7 | | | | | |
| P2M/S2M | 0.92 | 0.91 | 0.91 | 0.92 | 0.93 | 0.94 | 0.99 | 0.19 | | | | | |
| P2Po/P2M | 0.05 | 0.10 | 0.15 | 0.20 | 0.25 | 0.31 | 0.48 | 0.00 | | | | | |
| SSM/S2M | 0.003 | 0.005 | 0.005 | 0.008 | 0.005 | 0.002 | 0.012 | 0.019 | | | | | |
| | | | | | | | | | | | | | |

| | Oil and/or fat composition Comparative Examples | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| S2M | 87.3 | 86.8 | 80.9 | 89.5 | 89.1 | 88.6 | 88.2 | 88.3 | 88.4 | 88.5 | 78.6 | 78.3 | 83.7 |
| P2M | 81.7 | 80.6 | 64.2 | 75.1 | 74.0 | 72.7 | 71.4 | 72.2 | 73.0 | 73.8 | 74.2 | 77.3 | 59.0 |
| P2Po | 0.5 | 2.0 | 2.1 | 0.5 | 1.8 | 3.8 | 7.3 | 10.9 | 14.8 | 18.4 | 22.8 | 37.4 | 1.9 |
| S3 | 3.0 | 3.1 | 3.1 | 0.9 | 1.0 | 1.1 | 1.2 | 1.0 | 0.8 | 0.6 | 1.3 | 0.7 | 1.0 |
| P2M/S2M | 0.94 | 0.93 | 0.79 | 0.84 | 0.83 | 0.82 | 0.81 | 0.82 | 0.83 | 0.83 | 0.94 | 0.99 | 0.70 |
| P2Po/P2M | 0.00 | 0.02 | 0.00 | 0.01 | 0.02 | 0.05 | 0.10 | 0.15 | 0.20 | 0.25 | 0.31 | 0.48 | 0.00 |
| SSM/S2M | 0.009 | 0.005 | 0.069 | 0.009 | 0.005 | 0.003 | 0.005 | 0.005 | 0.008 | 0.005 | 0.002 | 0.012 | 0.069 |

**[Table 5]**

| | Oil and/or fat composition Examples | | | | | | | | | | | | |
|---|---|---|---|---|---|---|---|---|---|---|---|---|---|
| | 1 | 2 | 3 | 4 | 5 | 6 | 7 | | | | | | |
| 10°C | 93.7 | 92.5 | 92.5 | 92.4 | 92.5 | 91.8 | 86.1 | | | | | | |
| 15°C | 90.1 | 87.1 | 87.2 | 86.7 | 87.0 | 88.0 | 83.2 | | | | | | |
| 20°C | 80.6 | 75.1 | 73.0 | 72.5 | 73.6 | 76.1 | 79.7 | | | | | | |
| 25°C | 66.6 | 53.4 | 45.2 | 31.5 | 21.5 | 37.5 | 55.7 | | | | | | |
| 30°C | 6.5 | 4.1 | 2.8 | 1.7 | 1.3 | 1.6 | 0.0 | | | | | | |
| 35 °C | 0.1 | 0.0 | 0.0 | 0.2 | 0.0 | 0.1 | 0.1 | | | | | | |
| | | | | | | | | | | | | | |

| | Oil and/or fat composition Comparative Examples | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| 10°C | 95.2 | 94.9 | 94.3 | 95.5 | 95.1 | 94.0 | 92.7 | 92.5 | 92.4 | 92.4 | 91.5 | 85.9 | 94.0 |
| 15°C | 93.4 | 92.2 | 88.2 | 92.2 | 91.1 | 89.1 | 86.6 | 85.7 | 85.1 | 84.5 | 83.1 | 82.9 | 81.3 |
| 20°C | 86.9 | 84.6 | 77.2 | 85.5 | 83.2 | 79.0 | 70.6 | 63.2 | 60.5 | 62.9 | 64.2 | 65.1 | 62.4 |
| 25°C | 79.7 | 74.5 | 30.8 | 66.8 | 58.0 | 44.5 | 25.0 | 17.5 | 11.6 | 8.7 | 7.6 | 5.9 | 11.5 |
| 30°C | 14.5 | 10.2 | 2.3 | 3.0 | 2.3 | 2.5 | 2.2 | 1.5 | 1.0 | 0.8 | 0.3 | 0.0 | 1.5 |
| 35 °C | 0.1 | 0.1 | 0.0 | 0.0 | 0.0 | 0.0 | 0.0 | 0.3 | 0.0 | 0.0 | 0.0 | 0.0 | 0.2 |

The oil and/or fat composition Examples were the oil and/or fat compositions satisfying all of the following SFC.
· SFC (solid fat content) at 10°C is 85% or more
· SFC at 15°C is 80% or more
· SFC at 20°C is 66% or more

The chocolate product was prepared and evaluated using each oil and/or fat composition according to Table 6.

### Examination method

Blended were 5.7 wt.% of cocoa mass, 6.7 wt.% of cocoa powder, 52.6 wt.% of sugar, 0.4 wt.% of lecithin, and 34.6 wt.% of the oil and/or fat composition of Examples 1 to 7 and Comparative Examples 1 to 14 described in Table 3, and a chocolate dough was prepared by an ordinary method.

The cocoa butter content in the total oil and/or fat content contained in the chocolate was 10 wt.%, the total oil and/or fat content of the chocolate was 38.5 wt.%, and the oil and/or fat composition of the present invention in the oil and/or fat content was 89.9 wt.%.

The triglyceride composition of the cocoa butter contained in the cocoa mass at 55% and in the cocoa powder at 11% is as listed in Table 4.

The resulting chocolate dough was melted at 55°C, then filled in a mold, and solidified by cooling at 15°C for 30 minutes. Thereafter, a product released from the mold was aged at 20°C for 1 week.

### Chocolate eating evaluation method

Aged chocolate was evaluated for eating by five panelists. The eating evaluation was performed according to the following [Chocolate eating evaluation criteria], and a score determined by consultation was used as a final evaluation.

### [Chocolate eating evaluation criteria]

As the eating evaluation, the initial chew and the meltability in the mouth were evaluated according to the following evaluation criteria.

### Initial chew

2 points: The chocolate has the snap properties, which is preferable.
1 point: The snap properties are weak, and the chocolate is slightly soft.

### Meltability in mouth

3 points: The chocolate melts very sharply and quickly, and strong cold sensation is perceived.
2 points: The chocolate melts quickly, and cold sensation is perceived.
1 point: The chocolate melts extremely slowly, the residue severely remains in the mouth, and no cold sensation is perceived at all.
2 or more points in both the evaluation of initial chew and the evaluation of meltability in the mouth were rated as passing the eating evaluation of the chocolate.

### Chocolate bloom evaluation method

The aged chocolate was stored at 20°C, 25°C, and 28°C, and the bloom on the surface was evaluated according to the following [Evaluation criteria for bloom resistance of chocolate] by periodically observing the aged chocolate.

### [Evaluation criteria for bloom resistance of chocolate]

-: No bloom
+-: The surface is slightly cloudy
+: Spot-like small bloom or powdery whitening is slightly observed
++: Spot-like bloom or clear white discoloration is observed
+++: Large spot-like bloom or severe whitening is observed

The chocolate in which - or +- was maintained for 28 days was rated as passing the bloom evaluation.

The evaluation results of the chocolate examples/comparative examples are listed in Table 7.

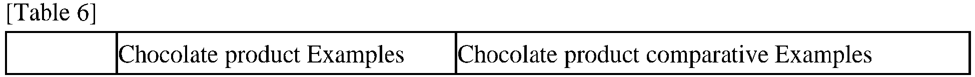

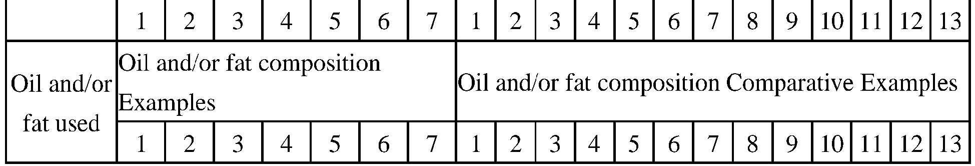

**[Table 7]**

| | | Comparative Example 1 | Comparative Example 2 | Example 1 | Example 2 | Example 3 | Example 4 | Example 5 | Example 6 | Example 7 | Comparative Example 3 |
|---|---|---|---|---|---|---|---|---|---|---|---|
| Eating evaluation | Initial bite | 2 | 2 | 2 | 2 | 2 | 2 | 2 | 2 | 2 | 1 |
| | Meltability in the mouth | 3 | 3 | 3 | 3 | 3 | 2 | 2 | 2 | 2 | 1 |

| | | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|---|
| Eating evaluation | Initial bite | 1 | 1 | 1 | 1 | 1 | 1 | 1 | 1 | 1 | 1 |
| | Meltability in the mouth | 1 | 1 | 1 | 1 | 1 | 1 | 1 | 1 | 1 | 1 |

| | | Comparative Example 1 | Comparative Example 2 | Example 1 | Example 2 | Example 3 | Example 4 | Example 5 | Example 6 | Example 7 | Comparative Example 3 |
|---|---|---|---|---|---|---|---|---|---|---|---|
| Storage appearance evaluation at 20°C | Day 7 | - | - | - | - | - | - | - | - | - | - |
| | Day 14 | +- | - | - | - | - | - | - | - | - | +- |
| | Day 21 | +- | +- | - | - | - | - | - | - | - | +- |
| | Day 28 | +- | +- | - | - | - | - | - | - | - | +- |

| | | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|---|
| Storage appearance evaluation at 20°C | Day 7 | + | + | + | + | + | + | + | + | + | + |
| | Day 14 | + | + | + | + | + | + | + | + | + | + |
| | Day 21 | +++ | +++ | +++ | +++ | +++ | +++ | +++ | +++ | +++ | +++ |
| | Day 28 | +++ | +++ | +++ | +++ | +++ | +++ | +++ | +++ | +++ | +++ |

| | | Comparative Example 1 | Comparative Example 2 | Example 1 | Example 2 | Example 3 | Example 4 | Example 5 | Example 6 | Example 7 | Comparative Example 3 |
|---|---|---|---|---|---|---|---|---|---|---|---|
| Storage appearance evaluation at 25°C | Day 7 | + | - | - | - | - | - | - | - | - | + |
| | Day 14 | + | - | - | - | - | - | - | - | - | + |
| | Day 21 | ++ | - | - | - | - | - | - | - | - | ++ |
| | Day 28 | + | - | - | - | - | - | - | - | - | + |

| | | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|---|
| Storage appearance evaluation at 25°C | Day 7 | + | + | + | + | + | + | + | + | + | + |
| | Day 14 | + | + | + | + | + | + | + | + | + | + |
| | Day 21 | +++ | +++ | +++ | +++ | +++ | +++ | +++ | +++ | +++ | +++ |
| | Day 28 | +++ | +++ | +++ | +++ | +++ | +++ | +++ | +++ | +++ | +++ |

| | | Comparative Example 1 | Comparative Example 2 | Example 1 | Example 2 | Example 3 | Example 4 | Example 5 | Example 6 | Example 7 | Comparative Example 3 |
|---|---|---|---|---|---|---|---|---|---|---|---|
| Storage appearance evaluation at 28°C | Day 7 | - | - | - | - | - | - | - | - | - | - |
| | Day 14 | +- | - | - | - | - | - | - | - | - | +- |
| | Day 21 | +- | +- | +- | - | - | - | - | - | +- | +- |
| | Day 28 | + | + | +- | +- | - | - | - | +- | +- | + |

| | | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|---|
| Storage appearance evaluation at 28°C | Day 7 | + | + | + | + | + | + | + | + | + | + |
| | Day 14 | + | + | + | + | + | + | + | + | + | + |
| | Day 21 | +++ | +++ | +++ | +++ | +++ | +++ | +++ | +++ | +++ | +++ |
| | Day 28 | +++ | +++ | +++ | +++ | +++ | +++ | +++ | +++ | +++ | +++ |

### Consideration of Table 7

All the chocolates blended with the oil and/or fat composition of Examples 1 to 7 in which the weight ratio of the P2Po content to the P2M content was 0.04 or more and the S3 content satisfied from 1.5 to 13 wt.% passed the bloom evaluation and also passed the eating evaluation. In Comparative Example 3 in which the oil and/or fat J as a palm mid fraction was blended, the initial chew was soft, and the snap properties were poor. In Comparative Examples 5 to 14 in which the oil and/or fat K rich in St2O was blended, the initial chew was softened, which was not preferable. In addition, appearance deterioration was severe during storage, and storage stability was low. Graining was not observed in the chocolates of Examples/Comparative Examples.

In the chocolate product examples, the chocolate could be easily released from the mold during chocolate preparation, and releasability was good. In the chocolate product comparative examples 3 to 13, the releasability was poor, and it was necessary to vibrate by strongly tapping to release the chocolate from the mold.

### [Study 2] Effect of P2Po content in chocolate with different cocoa butter content

Chocolate products having different cocoa butter contents were prepared and evaluated using each oil and/or fat composition according to Table 8 (unit: wt.%).

### Examination method

A chocolate dough was prepared by an ordinary method in such a manner that the cocoa butter content in the total oil and/or fat content contained in the chocolate was 3 wt.%, 10 wt.%, 15 wt.%, and 20 wt.%. The resulting chocolate dough was melted at 55°C, then filled in a mold, and solidified by cooling at 15°C for 30 minutes. Thereafter, a product released from the mold was aged at 20°C for 1 week.

The chocolate having a cocoa butter content of 3 wt.% contained 52.6 wt.% of sugar, 0.4 wt.% of lecithin, 0.2 wt.% of cocoa mass, 9.4 wt.% of cocoa powder, and 37.4 wt.% of each oil and/or fat composition.

The chocolate having a cocoa butter content of 10 wt.% contained 52.6 wt.% of sugar, 0.4 wt.% of lecithin, 5.7 wt.% of cocoa mass, 6.7 wt.% of cocoa powder, and 34.6 wt.% of each oil and/or fat composition.

The chocolate having a cocoa butter content of 15 wt.% contained 52.6 wt.% of sugar, 0.4 wt.% of lecithin, 9.6 wt.% of cocoa mass, 4.7 wt.% of cocoa powder, and 32.7 wt.% of each oil and/or fat composition.

The chocolate having a cocoa butter content of 20 wt.% contained 52.6 wt.% of sugar, 0.4 wt.% of lecithin, 13.6 wt.% of cocoa mass, 2.7 wt.% of cocoa powder, and 30.7 wt.% of each oil and/or fat composition.

The total oil and/or fat content of the chocolate was 38.5 wt.% in each chocolate, and the oil and/or fat composition of the present invention in the oil and/or fat content was 97.1 wt.% for the chocolate having a cocoa butter content of 3 wt.%, 89.9 wt.% for the chocolate having a cocoa butter content of 10 wt.%, 84.9 wt.% for the chocolate having a cocoa butter content of 15 wt.%, and 79.7 wt.% for the chocolate having a cocoa butter content of 20 wt.%.

### Chocolate bloom evaluation method

The aged chocolate was stored at 20°C, and the bloom on the surface was evaluated according to the following Evaluation criteria for bloom resistance of chocolate by periodically observing the aged chocolate. The evaluation results are listed in Table 9.

### Evaluation criteria for bloom resistance of chocolate

-: No bloom
+-: The surface is slightly cloudy
+: Spot-like small bloom or powdery whitening is slightly observed.

**[Table 8]**

| | | | | | | | | | | |
|---|---|---|---|---|---|---|---|---|---|---|
| Cocoa butter content: 3% | Chocolate product Examples | | | | | | | Chocolate product Comparative Examples | | |
| | 8 | 9 | 10 | 11 | 12 | 13 | 14 | 14 | 15 | 16 |
| Cocoa butter content: 10% | Chocolate product Examples | | | | | | | Chocolate product Comparative Examples | | |
| | 15 | 16 | 17 | 18 | 19 | 20 | 21 | 17 | 18 | 19 |
| Cocoa butter content: 15% | Chocolate product Examples | | | | | | | Chocolate product Comparative Examples | | |
| | 22 | 23 | 24 | 25 | 26 | 27 | 28 | 20 | 21 | 22 |
| Cocoa butter content: 20% | Chocolate product Examples | | | | | | | Chocolate product Comparative Examples | | |
| | 29 | 30 | 31 | 32 | 33 | 34 | 35 | 23 | 24 | 25 |
| Oil and/or fat used | Oil and/or fat composition Examples | | | | | | | Oil and/or fat composition Comparative Examples | | |
| | 1 | 2 | 3 | 4 | 5 | 6 | 7 | 1 | 2 | 3 |

**[Table 9]**

| | | | Chocolate product Examples | | | | | | | Chocolate product Comparative Examples | | |
|---|---|---|---|---|---|---|---|---|---|---|---|---|
| | | | 8 | 9 | 10 | 11 | 12 | 13 | 14 | 14 | 15 | 16 |
| Cocoa butter content: 3% | Storage appearance evaluation at 20°C | Day 7 | - | - | - | - | - | - | - | - | - | - |
| | | Day 14 | - | - | - | - | - | - | - | +- | +- | +- |
| | | Day 21 | - | - | - | - | - | - | - | +- | +- | +- |
| | | Day 28 | - | - | - | - | - | - | - | +- | +- | +- |

| | | | Chocolate product Examples | | | | | | | Chocolate product Comparative Examples | | |
|---|---|---|---|---|---|---|---|---|---|---|---|---|
| | | | 15 | 16 | 17 | 18 | 19 | 20 | 21 | 17 | 18 | 19 |
| Cocoa butter content: 10% | Storage appearance evaluation at 20°C | Day 7 | - | - | - | - | - | - | - | - | - | - |
| | | Day 14 | - | - | - | - | - | - | - | +- | - | +- |
| | | Day 21 | - | - | - | - | - | - | - | +- | +- | +- |
| | | Day 28 | - | - | - | - | - | - | - | +- | +- | +- |

| | | | Chocolate product Examples | | | | | | | Chocolate product Comparative Examples | | |
|---|---|---|---|---|---|---|---|---|---|---|---|---|
| | | | 22 | 23 | 24 | 25 | 26 | 27 | 28 | 20 | 21 | 22 |
| Cocoa butter content: 15% | Storage appearance evaluation at 25°C | Day 7 | - | - | - | - | - | - | - | - | - | - |
| | | Day 14 | - | - | - | - | - | - | - | +- | +- | +- |
| | | Day 21 | +- | - | - | - | - | +- | +- | +- | +- | + |
| | | Day 28 | +- | +- | +- | +- | +- | +- | +- | +- | +- | + |

| | | | Chocolate product Examples | | | | | | | Chocolate product Comparative Examples | | |
|---|---|---|---|---|---|---|---|---|---|---|---|---|
| | | | 29 | 30 | 31 | 32 | 33 | 34 | 35 | 23 | 24 | 25 |
| Cocoa butter content: 20% | Storage appearance evaluation at 25°C | Day 7 | - | - | - | - | - | - | - | - | - | - |
| | | Day 14 | - | - | - | - | - | +- | +- | +- | +- | +- |
| | | Day 21 | - | - | - | - | - | +- | +- | +- | +- | + |
| | | Day 28 | +- | +- | +- | +- | +- | +- | +- | + | +- | + |

### Consideration of Table 9

Within a wide range of a cocoa butter content of from 3 to 20 wt.%, Examples 1 to 7 were evaluated as good as or even better than Comparative Examples 1 to 3 in terms of bloom evaluation.

### [Study 3] Effect of adding S3 triglyceride

### Mixing of oil and/or fat composition

The oil and/or fat L or M was mixed with the oil and/or fat D according to Table 10 (unit: wt.%) to obtain the oil and/or fat compositions of Examples/Comparative Examples. The triglyceride composition is as listed in Table 11 below (unit: wt.%). The content of saturated fatty acid having 20 carbon atoms or more in the constituent fatty acids calculated from the fatty acid compositions of oils and/or fats D, L, and M in Table 2, and the weight ratio of the content of saturated fatty acid with C20 or more to the content of saturated fatty acid (S content) are listed in Table 11.

**[Table 10]**

| | Oil and/or fat composition | | | | | | | | | | | | | | |
|---|---|---|---|---|---|---|---|---|---|---|---|---|---|---|---|
| | Comparative Example 14 | Example 8 | Example 9 | EXAMPLE 10 | EXAMPLE 11 | Example 12 | Example 13 | Example 14 | Example 15 | Example 16 | Example 17 | Example 18 | Example 19 | Example 20 | Example 21 |
| Oil and/or fat D | 100 | 99.5 | 99.0 | 98.0 | 96.0 | 94.0 | 92.0 | 90.0 | 99.5 | 99.0 | 98.0 | 96.0 | 94.0 | 92.0 | 90.0 |
| Oil and/or fat L | | 0.5 | 1.0 | 2.0 | 4.0 | 6.0 | 8.0 | 10.0 | | | | | | | |
| Oil and/or fat M | | | | | | | | | 0.5 | 1.0 | 2.0 | 4.0 | 6.0 | 8.0 | 10.0 |

**[Table 11]**

| | Oil and/or fat composition | | | | | | | | | | | | | | |
|---|---|---|---|---|---|---|---|---|---|---|---|---|---|---|---|
| | Comparative Example 14 | Example 8 | Example 9 | EXAMPLE 10 | EXAMPLE 11 | Example 12 | Example 13 | Example 14 | Example 15 | Example 16 | Example 17 | Example 18 | Example 19 | Example 20 | Example 21 |
| S2M | 87.6 | 87.2 | 86.7 | 85.8 | 84.1 | 82.3 | 80.6 | 78.8 | 87.2 | 86.7 | 85.8 | 84.1 | 82.3 | 80.6 | 78.8 |
| P2M | 79.3 | 78.9 | 78.5 | 77.7 | 76.1 | 74.5 | 73.0 | 71.4 | 78.9 | 78.5 | 77.7 | 76.1 | 74.5 | 73.0 | 71.4 |
| P2Po | 8.1 | 8.1 | 8.0 | 7.9 | 7.8 | 7.6 | 7.5 | 7.3 | 8.1 | 8.0 | 7.9 | 7.8 | 7.6 | 7.5 | 7.3 |
| S3 | 1.3 | 1.8 | 2.3 | 3.3 | 5.2 | 7.2 | 9.2 | 11.2 | 1.8 | 2.3 | 3.3 | 5.2 | 7.2 | 9.2 | 11.2 |
| P2M/S2M | 0.91 | 0.91 | 0.91 | 0.91 | 0.91 | 0.91 | 0.91 | 0.91 | 0.91 | 0.91 | 0.91 | 0.91 | 0.91 | 0.91 | 0.91 |
| P2Po/P2M | 0.10 | 0.10 | 0.10 | 0.10 | 0.10 | 0.10 | 0.10 | 0.10 | 0.10 | 0.10 | 0.10 | 0.10 | 0.10 | 0.10 | 0.10 |
| SSM/S2M | 0.005 | 0.005 | 0.005 | 0.005 | 0.005 | 0.005 | 0.005 | 0.005 | 0.005 | 0.005 | 0.005 | 0.005 | 0.005 | 0.005 | 0.005 |
| Content of saturated fatty acid having 20 carbon atoms or more | 1.3 | 1.3 | 1.3 | 1.2 | 1.2 | 1.2 | 1.2 | 1.2 | 1.5 | 1.8 | 2.4 | 3.5 | 4.5 | 5.6 | 6.7 |
| Weight ratio of content of saturated fatty acid having 20 carbon atoms or more to content of saturated fatty acid | 0.02 | 0.02 | 0.02 | 0.02 | 0.02 | 0.02 | 0.02 | 0.02 | 0.02 | 0.03 | 0.04 | 0.05 | 0.07 | 0.09 | 0.10 |

The chocolate product was prepared and evaluated using each oil and/or fat composition according to Table 12 (unit: wt.%).

### Examination method

Blended were 5.7 wt.% of cocoa mass, 6.7 wt.% of cocoa powder, 52.6 wt.% of sugar, 0.4 wt.% of lecithin, and 34.6 wt.% of the oil and/or fat composition, and a chocolate dough was prepared by an ordinary method. In each case, the total oil and/or fat content was 38.5 wt.%.

The resulting chocolate dough was melted at 55°C, then filled in a mold, and solidified by cooling at 15°C for 30 minutes. Thereafter, a product released from the mold was aged at 20°C for 1 week.

### Chocolate eating evaluation method

Aged chocolate was evaluated for eating by five panelists. The eating evaluation was performed according to the following [Chocolate eating evaluation criteria], and a score determined by consultation was used as a final evaluation and listed in Table 13.

### [Chocolate eating evaluation criteria]

As the eating evaluation, the initial chew and the meltability in the mouth were evaluated according to the following evaluation criteria.

### Initial chew

2 points: The chocolate has the snap properties, which is preferable.
1 point: The snap properties are weak, and the chocolate is slightly soft.

### Meltability in mouth

3 points: The chocolate melts very sharply and quickly, and strong cold sensation is perceived.
2 points: The chocolate melts quickly, and cold sensation is perceived.
1 point: The chocolate melts extremely slowly, the residue severely remains in the mouth, and no cold sensation is perceived at all.
2 or more points in both the evaluation of initial chew and the evaluation of meltability in the mouth were rated as passing the eating evaluation of the chocolate.

### Chocolate bloom evaluation method

The aged chocolate was stored at 20°C, and the bloom on the surface was evaluated according to the following [Evaluation criteria for bloom resistance of chocolate] by periodically observing the aged chocolate. The evaluation results are listed in Table 13.

### [Evaluation criteria for bloom resistance of chocolate]

-: No bloom
+-: The surface is slightly cloudy
+: Spot-like small bloom or powdery whitening is slightly observed.

| | Chocolate product | | | | | | | | | | | | | | |
|---|---|---|---|---|---|---|---|---|---|---|---|---|---|---|---|
| | Comparative Example 26 | Example 36 | Example 37 | Example 38 | Example 39 | Example 40 | Example 41 | Example 42 | Example 43 | Example 44 | Example 45 | Example 46 | Example 47 | Example 48 | Example 49 |
| Oil and/or fat used | Oil and/or fat composition | | | | | | | | | | | | | | |
| | Comparative Example 14 | Example 8 | Example 9 | Example 10 | Example 11 | Example 12 | Example 13 | Example 14 | Example 15 | Example 16 | Example 17 | Example 18 | Example 19 | Example 20 | Example 21 |

**[Table 12]**

| | | Chocolate product | | | | | | | | | | | | | | |
|---|---|---|---|---|---|---|---|---|---|---|---|---|---|---|---|---|
| | | Comparative Example 26 | Example 36 | Example 37 | Example 38 | Example 39 | Example 40 | Example 41 | Example 42 | Example 43 | Example 44 | Example 45 | Example 46 | Example 47 | Example 48 | Example 49 |
| Eating evaluation | Initial bite | 2 | 2 | 2 | 2 | 2 | 2 | 2 | 2 | 2 | 2 | 2 | 2 | 2 | 2 | 2 |
| | Meltability in the mouth | 3 | 3 | 3 | 3 | 3 | 3 | 2 | 2 | 3 | 2 | 2 | 2 | 2 | 2 | 2 |
| Appearance evaluation | Day 7 | +- | +- | - | - | - | - | - | - | - | - | - | - | - | - | - |
| | Day 14 | +- | +- | - | - | - | - | - | - | - | - | - | - | - | - | - |
| | Day 21 | +- | +- | +- | - | - | - | - | - | - | - | - | - | - | - | - |
| | Day 28 | + | +- | +- | - | - | - | - | - | - | - | - | - | - | - | - |

### Consideration of Table 13

Good initial chew and good meltability in the mouth were obtained in all test groups. In addition, as an appearance change during storage, the chocolate product of Comparative Example 17 deteriorated; however, good appearance was maintained in the chocolate products of Examples. In the chocolate products of Examples 17 to 28 using the oil and/or fat compositions of Examples 10 to 21 having a high S3 content, the appearance was excellent.

## Claims

1. An oil and/or fat composition satisfying (a) and (b) described below:
(a) a weight ratio of a content of a triglyceride having two palmitic acids (P) and one palmitoleic acid (Po) bonded thereto (P2Po) to a content of a triglyceride having two palmitic acids (P) and one monounsaturated fatty acid having from 16 to 24 carbon atoms (M) bonded thereto (P2M) (P2Po/P2M), being 0.04 or more; and
(b) a content of a triglyceride having three saturated fatty acids each having from 16 to 24 carbon atoms (S) bonded thereto (S3), being from 1.5 to 13 wt.%.

2. The oil and/or fat composition according to claim 1, wherein the P2Po content in the oil and/or fat composition is 3.0 wt.% or more.

3. The oil and/or fat composition according to claim 1 or 2, wherein the oil and/or fat composition is for a chocolate product.

4. The oil and/or fat composition according to claim 3, wherein the oil and/or fat composition is for a non-tempering type chocolate product.

5. A chocolate product comprising:
an oil and/or fat content of from 20.0 to 50.0 wt.% in the chocolate product; and
the oil and/or fat composition described in claim 1 or 2 of 30.0 wt.% or more in the oil and/or fat content.

6. The chocolate product according to claim 5, wherein the chocolate product is of a non-tempering type.

7. A method for producing the chocolate product described in claim 5, the method for producing the chocolate product, comprising cooling and solidifying the melted chocolate product at a temperature of 10°C or higher.
